# EUROPEAN PATENT APPLICATION

(11) **EP 4 563 281 A1**
(43) Date of publication of application: **04.06.2025**
(21) Application number: 23846634.6
(22) Date of filing: 27.07.2023
(51) Int. Cl.: B23Q 7/04

(54) **WORKPIECE TRANSFER DEVICE AND MACHINE TOOL**

(30) Priority: 28.07.2022 JP 2022120778
(71) Applicant: Citizen Watch Co., Ltd., Nishitokyo-shi, Tokyo 188-8511 (JP); Citizen Machinery Co., Ltd., Nagano 389-0206 (JP)
(72) Inventor: MIYAKAWA, Naoki, Kitasaku-gun, Nagano 389-0206 (JP); IZUMI, Kazuyuki, Kitasaku-gun, Nagano 389-0206 (JP); HIOKI, Takahiro, Kitasaku-gun, Nagano 389-0206 (JP); SAKURADA, Yohichi, Kitasaku-gun, Nagano 389-0206 (JP)
(74) Representative: Ricker, Mathias
(86) International application number: PCT/JP2023/027634
(87) International publication number: WO 2024/024904

(57) **Abstract**

A workpiece transfer device includes a base unit extending in a first direction, a housing unit disposed upright from the base unit in a second direction orthogonal to the first direction, a slide unit disposed at a housed position to be housed in the housing unit, a slide unit-moving mechanism configured to move the slide unit from the housed position, a linear guide unit configured to guide the slide unit in the second direction, and a workpiece grasp unit disposed on a first surface of the slide unit near an end of the slide unit remote from the base unit and configured to grasp a workpiece W. A separation distance between the base unit and an end of the workpiece grasp unit adjacent to the base unit is less than a separation distance between the base unit and the end of the slide unit remote from the base unit.

## Description

### FIELD

The present disclosure relates to a workpiece transfer device and a machine tool.

### BACKGROUND

A known mechanism rotates a pinion screwed to a rack disposed on a support frame to move chuck hands, which are connected to a lower surface of a board connected to an end of a pair of guide arms and which grasps a workpiece, in the lengthwise direction of the rack (see, e.g., Japanese Unexamined Patent Publication JP57-163762A). A workpiece transfer device can be disposed even in a place where vertical space is limited by using the mechanism described in JP57-163762A to make the height of a support frame substantially the same as that of a pair of guide arms.

### SUMMARY

Further, the use of the mechanism described in the JP57-163762A enables a system including a machine tool and a transfer device to be manufactured at reduced cost and to take up less space. However, further downsizing of workpiece transfer devices is desired in machine tools.

An object of the present disclosure is to provide a workpiece transfer device that can be downsized.

A workpiece transfer device of the present disclosure includes a base unit extending in a first direction, a housing unit disposed upright from the base unit in a second direction orthogonal to the first direction, a slide unit disposed at a housed position to be housed in the housing unit, a slide unit-moving mechanism configured to move the slide unit from the housed position, a linear guide unit configured to guide the slide unit in the second direction, and a workpiece grasp unit disposed on a first surface of the slide unit near an end of the slide unit remote from the base unit and configured to grasp a workpiece. A separation distance between the base unit and an end of the workpiece grasp unit adjacent to the base unit is less than a separation distance between the base unit and the end of the slide unit remote from the base unit.

In the workpiece transfer device of the present disclosure, the slide unit preferably has a cut formed at the end remote from the base unit, and at least part of a workpiece grasped by the workpiece grasp unit is preferably disposed inside the cut formed in the slide unit.

**In** the workpiece transfer device of the present disclosure, the linear guide unit preferably includes a first linear guide disposed along one of a pair of sides extending in the second direction of the slide unit, and a second linear guide disposed along the other of the pair of sides extending in the second direction of the slide unit.

**In** the workpiece transfer device of the present disclosure, the first linear guide preferably includes a first rail disposed on a second surface of the slide unit opposite the first surface and extending in the second direction as well as a first holder disposed on the housing unit and holding the first rail, and the second linear guide preferably includes a second rail disposed on the second surface of the slide unit and extending in the second direction as well as a second holder disposed on the housing unit and holding the second rail.

In the workpiece transfer device of the present disclosure, the first rail and the second rail are preferably disposed on either side of the cut formed in the slide unit.

In the workpiece transfer device of the present disclosure, the housing unit preferably has a cut formed at an end remote from the base unit, and the first holder and the second holder are preferably disposed on either side of the cut formed in the housing unit.

In the workpiece transfer device of the present disclosure, an outer end of the workpiece grasp unit is preferably seen so as to be disposed near the first rail and the second rail when viewed from a front side in the first direction.

In the workpiece transfer device of the present disclosure, the slide unit-moving mechanism preferably includes a rack gear disposed on the first surface along one of the pair of sides extending in the second direction of the slide unit as well as a pinion screwed to the rack gear.

In the workpiece transfer device of the present disclosure, a separation distance between the base unit and an end of the workpiece grasp unit remote from the base unit is preferably equal to or less than the separation distance between the base unit and the end of the slide unit remote from the base unit.

A machine tool according to an aspect of the present disclosure includes a spindle that holds a workpiece rotatably, a tool post that holds a tool for machining a workpiece held by the spindle, and a workpiece transfer device that transfers a workpiece held by the spindle. The workpiece transfer device includes a base unit extending in a first direction, a housing unit disposed upright from the base unit in a second direction orthogonal to the first direction, a slide unit disposed at a housed position to be housed in the housing unit, a slide unit-moving mechanism configured to move the slide unit from the housed position, a linear guide unit configured to guide the slide unit in the second direction, and a workpiece grasp unit disposed on a first surface of the slide unit near an end of the slide unit remote from the base unit and configured to grasp a workpiece. A separation distance between the base unit and an end of the workpiece grasp unit adjacent to the base unit is less than a separation distance between the base unit and the end of the slide unit remote from the base unit.

The present disclosure enables a workpiece transfer device to be downsized.

### BRIEF DESCRIPTION OF DRAWINGS

FIG. 1 is a perspective view of a machine tool of an embodiment;
FIG. 2 is a perspective view of the machine tool shown in FIG. 1 from which a casing is removed;
FIGs. 3(a) to 3(f) show a workpiece machining process performed by the machine tool shown in FIG. 1; FIGs. (a), (b), (c), (d), (e), and (f) show first, second, third, fourth, fifth, and sixth states, respectively;
FIG. 4 is a perspective view (part 1) of a workpiece transfer device shown in FIG. 2;
FIG. 5 is a perspective view (part 2) of the workpiece transfer device 1 shown in FIG. 2;
FIG. 6 is a partial perspective view of a principal part of the workpiece transfer device shown in FIG. 2;
FIGs. 7(a) and (b) are a front view and a rear view of the principal part of the workpiece transfer device 1 shown in FIG. 2, respectively;
FIGs. 8(a) and (b) are a perspective view (part 1) and a perspective view (part 2) of a housing unit shown in FIG. 4, respectively;
FIG. 9(a) is a perspective view (part 1) of the housing unit, a slide unit, a grasp base unit, a workpiece grasp unit, a linear guide unit, and a slide unit-moving mechanism shown in FIG. 4; (b) is a perspective view (part 2) of the housing unit, a slide unit, a grasp base unit, a workpiece grasp unit, a linear guide unit, and a slide unit-moving mechanism shown in FIG. 4;
FIG. 10 is a perspective view of the grasp base unit shown in FIG. 4;
FIGs. 11(a) and (b) are a front view and a rear view of the workpiece transfer device shown in FIG. 2, respectively;
FIG. 12 is a partial perspective view of the workpiece transfer device shown in FIG. 2 from which a vertical stepping motor is removed;
FIGs. 13(a) and (b) are a front view and a rear view of the workpiece transfer device shown in FIG. 2 grasping a workpiece W at a housed position, respectively; and
FIGs. 14(a) and (b) are a front view and a rear view of the workpiece transfer device shown in FIG. 2 grasping a workpiece W at a grasp position, respectively.

### DESCRIPTION OF EMBODIMENTS

A workpiece transfer device and a machine tool of an embodiment will now be described with reference to the attached drawings. However, note that the technical scope of the present invention is not limited to embodiments thereof and covers the invention described in the claims and equivalents thereof.

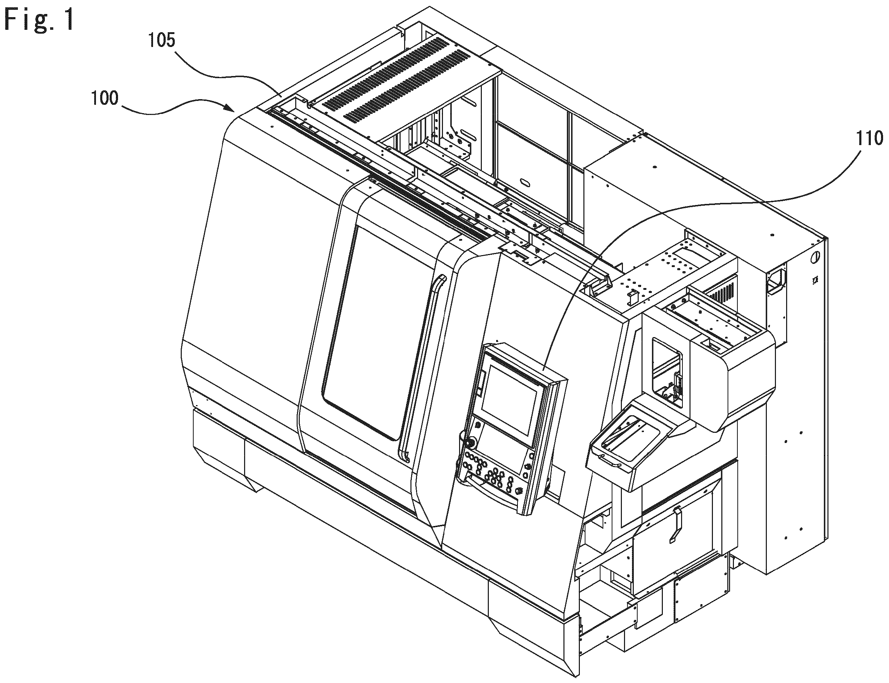

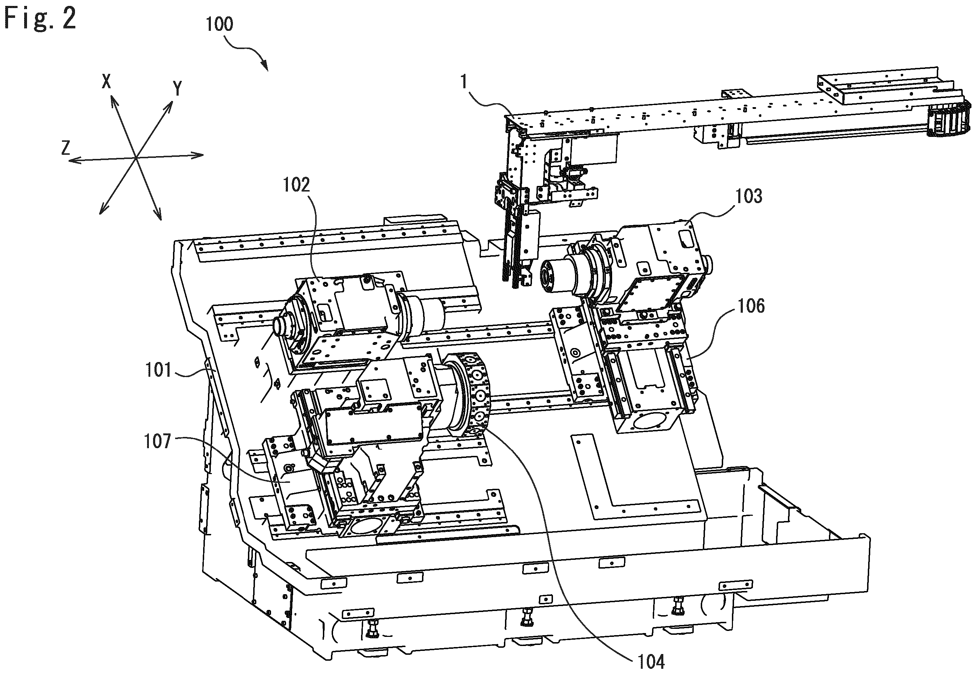

FIG. 1 is a perspective view of a machine tool of an embodiment; FIG. 2 is a perspective view of the machine tool shown in FIG. 1 from which a casing is removed.

The machine tool 100 is a slant-type machine tool including a bed 101 disposed in an inclined manner, a front spindle 102, a rear spindle 103, a turret tool post 104, a casing 105, an NC device 110, and a workpiece transfer device 1. The bed 101 is equipped with the front spindle 102, the rear spindle 103, and the turret tool post 104, which are housed in the casing 105. The front spindle 102 is a component that can grasp a workpiece, and is fixed to the bed 101. The rear spindle 103 is a component that can grasp a workpiece grasped by the front spindle 102, and can move in two directions, X- and Y-axis directions, by being installed on a moving mechanism 106 that moves along the X- and Y-axis directions. The turret tool post 104 holds various tools and can move in three directions, X-, Y-, and Z-axis directions, by being installed on a moving mechanism 107 that moves along the X-, Y-, and Z-axis directions. The rotation of the front spindle 102 and the rear spindle 103 and the movement of the rear spindle 103 and the turret tool post 104 are controlled by the NC device 110.

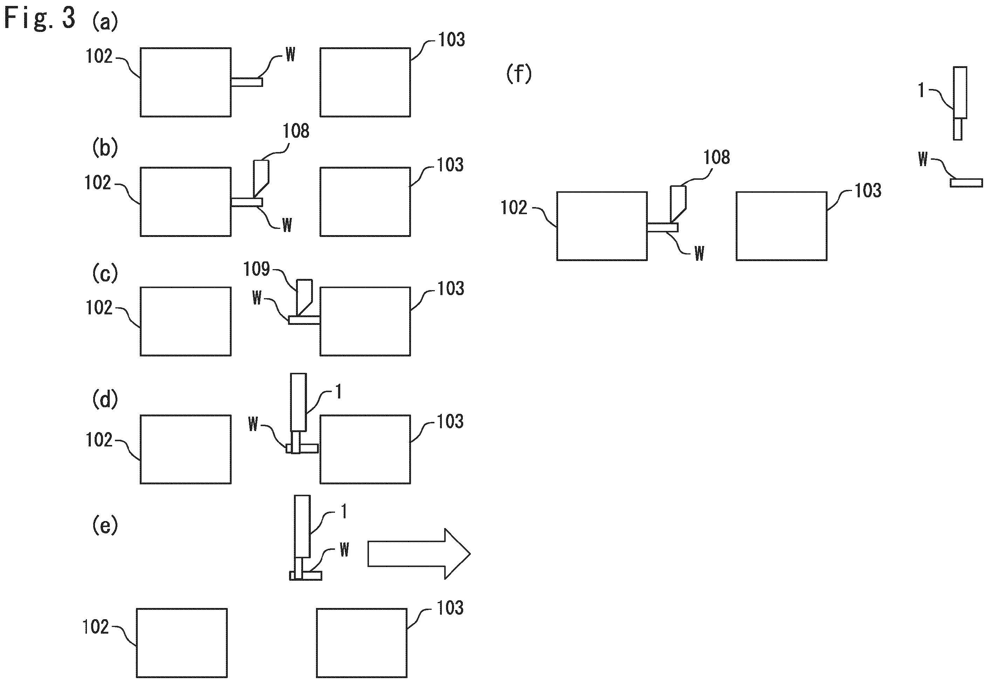

FIGs. 3(a) to 3(f) show a workpiece machining process performed by the machine tool 100; FIGs. 3(a), 3(b), 3(c), 3(d), 3(e), and 3(f) show first, second, third, fourth, fifth, and sixth states, respectively.

First, in the first state, the front spindle 102 holds a workpiece W. Then, in the second state, the front spindle 102 rotates the workpiece W and the turret tool post 104 moves a tool 108, so that the workpiece W is machined by the tool 108 held by the turret tool post 104. When the tool 108 finishes machining the workpiece W, the rear spindle 103 moves to a position near the front spindle 102 and grasps the workpiece W machined by the tool 108. Then, in the third state, the rear spindle 103 rotates the workpiece W and the turret tool post 104 moves a tool 109, so that the workpiece W is machined by the tool 109 held by the turret tool post 104. After the completion of machining of the workpiece held by the rear spindle 103, in the fourth state the workpiece transfer device 1 grasps the workpiece W held by the rear spindle 103. Then, in the fifth state, the workpiece transfer device 1 lifts the grasped workpiece W and moves it horizontally as indicated by an arrow. In the sixth state, the workpiece transfer device 1 carries the grasped workpiece W out of the machine tool 100, and the machining of the next workpiece W is started.

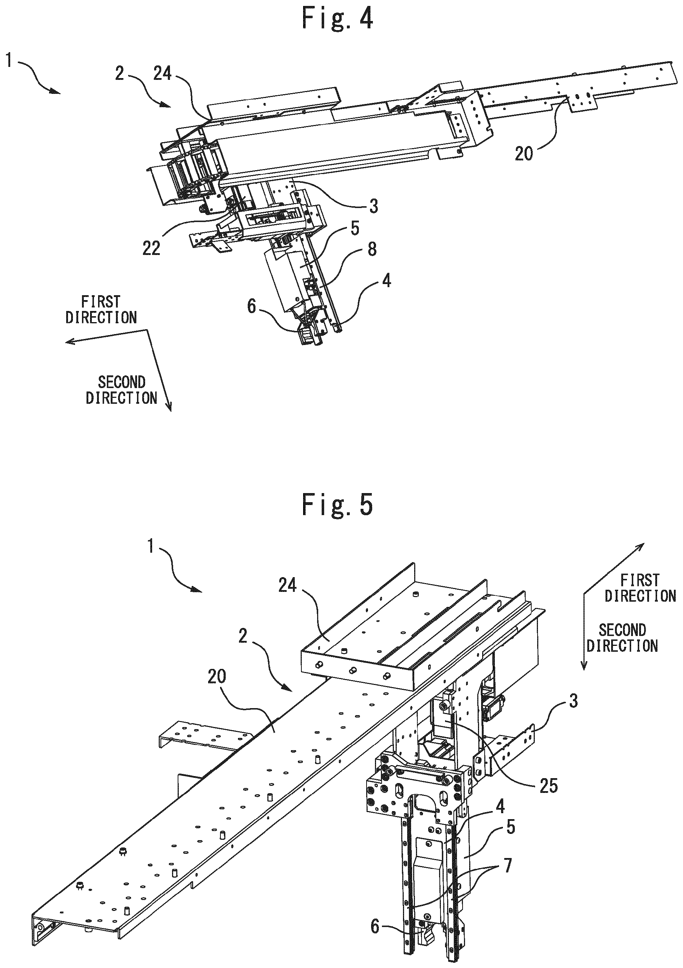

FIGs. 4 and 5 are a perspective view (part 1) and a perspective view (part 2) of the workpiece transfer device 1, respectively.

The workpiece transfer device 1 includes a base unit 2, a housing unit 3, a slide unit 4, a grasp base unit 5, a workpiece grasp unit 6, a linear guide unit 7, and a slide unit-moving mechanism 8, and carries out a workpiece W held by the rear spindle 103. In the machine tool 100, the workpiece transfer device 1 carries out a workpiece W held by the rear spindle 103; but in the machine tool of the embodiment, the workpiece transfer device 1 may carry a workpiece W into the machine tool or transfer a workpiece W inside the machine tool.

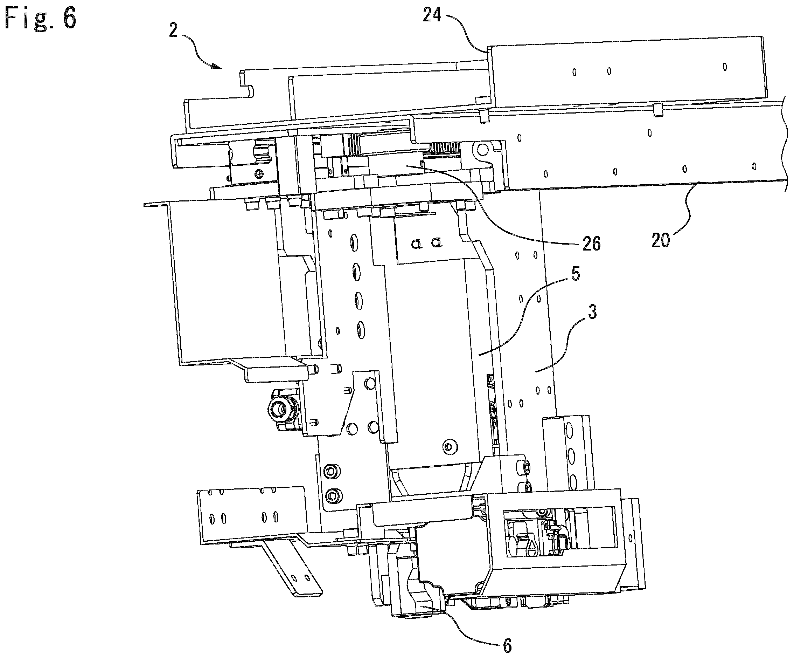

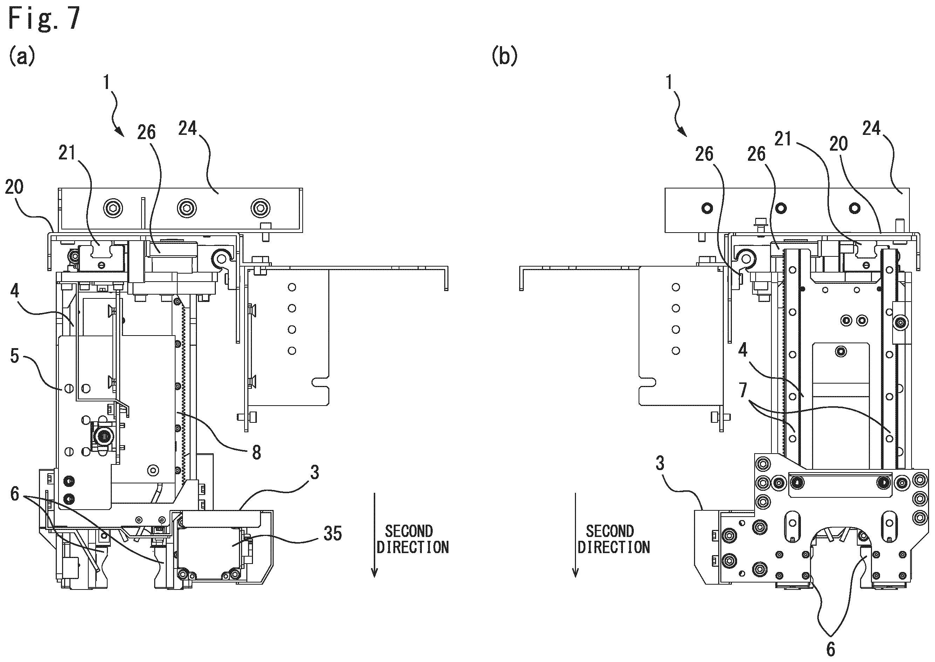

FIG. 6 is a partial perspective view of a principal part of the workpiece transfer device 1; FIGs. 7(a) and 7(b) are a front view and a rear view of the principal part of the workpiece transfer device 1, respectively.

The base unit 2 includes a base plate 20, a rail 21, a horizontal drive 22, a power feed mechanism 23, and a base connector 24, and is disposed near the ceiling of the casing 105 and inside the machine tool 100. The base unit 2 is disposed to extend in the longitudinal direction of the machine tool 100, also referred to as a first direction. The base plate 20 is a flat component with the base connector 24 on the upper surface and the rail 21 and the horizontal drive 22 on the lower surface, and is disposed with the long sides extending in the first direction. The rail 21 is a bar-shaped component longer than the long sides of the base plate 20 and is disposed to extend parallel to the long sides of the base plate 20. The horizontal drive 22 includes a horizontal stepping motor 25 and a rack and pinion 26, and moves the housing unit 3, the slide unit 4, the grasp base unit 5, the workpiece grasp unit 6, the linear guide unit 7, and the slide unit-moving mechanism 8 along the rail 21 in the first direction. The power feed mechanism 23 supplies the horizontal stepping motor 25 and a vertical stepping motor 35 included in the housing unit 3 with current depending on control signals output from the NC device 110. The base connector 24 is fixed to the casing 105 near the ceiling of the casing 105. The horizontal stepping motor 25 supplies power to the horizontal drive 22 in response to current being supplied via the power feed mechanism 23. The rack and pinion 26 moves the slide unit 4, the grasp base unit 5, the workpiece grasp unit 6, the linear guide unit 7, and the slide unit-moving mechanism 8 in the first direction in response to the shaft of the horizontal stepping motor 25 being rotated.

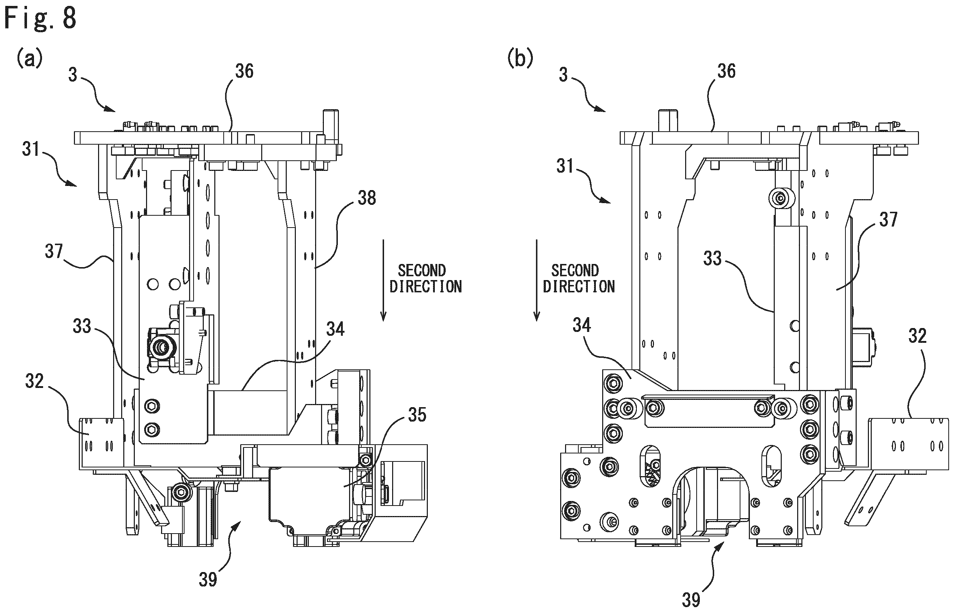

FIGs. 8(a) and 8(b) are a perspective view (part 1) and a perspective view (part 2) of the housing unit 3, respectively.

The housing unit 3 includes a first base 31, a second base 32, a front board 33, and a rear board 34 in addition to the vertical stepping motor 35, is disposed upright from the base unit 2 in a second direction orthogonal to the first direction in which the base unit 2 extends, and houses the slide unit 4 in a housed position. The first base 31 is a U-shaped component including a base 36, a first arm 37, and a second arm 38, and forms a housed position where the slide unit 4 is housed. The base 36 is shaped like a flat plate and connected to the horizontal drive 22. The first arm 37 is a flat plate extending perpendicularly from an end of one of a pair of long sides of the base 36 in a direction orthogonal to the lengthwise direction of the base 36. The second arm 38 is a flat plate extending perpendicularly from an end of the other of the pair of long sides of the base 36 so as to face the first arm 37. The second base 32 is connected to the ends of the first arm 37 and the second arm 38 via the front board 33. The front board 33 is connected to the first arm 37 and the second arm 38.

The rear board 34 is a flat component connected to the ends of the first arm 37 and the second arm 38 so as to face the front board 33. The rear board 34 has a first cut 39 formed on the edge remote from the base unit 2. The vertical stepping motor 35 supplies power to the slide unit-moving mechanism 8 in response to current being supplied via the power feed mechanism 23.

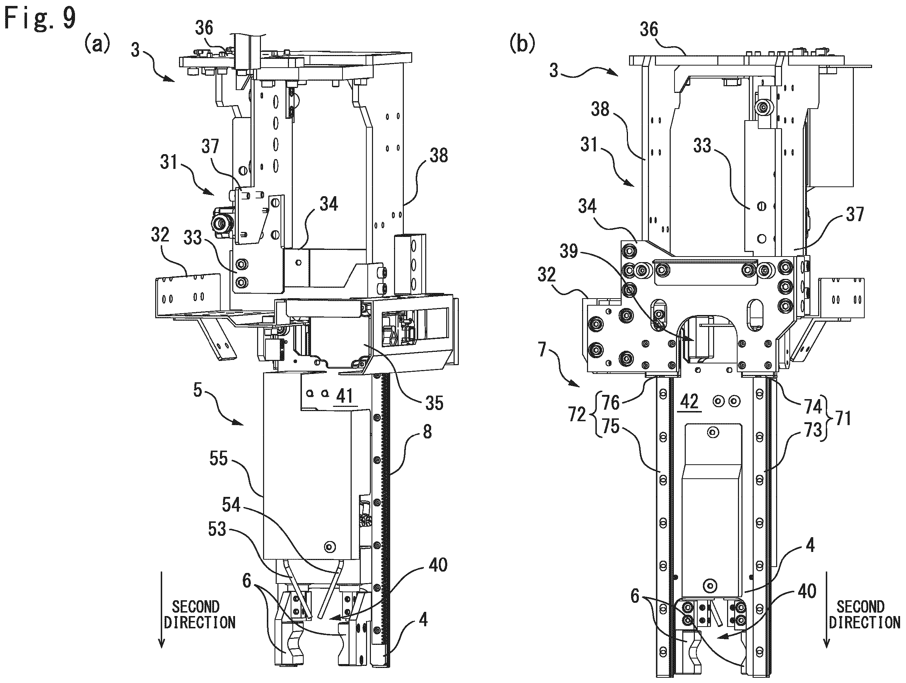

FIG. 9(a) is a perspective view (part 1) of the housing unit 3, the slide unit 4, the grasp base unit 5, the workpiece grasp unit 6, the linear guide unit 7, and the slide unit-moving mechanism 8. FIG. 9(b) is a perspective view (part 2) of the housing unit 3, the slide unit 4, the grasp base unit 5, the workpiece grasp unit 6, the linear guide unit 7, and the slide unit-moving mechanism 8.

The slide unit 4 is a flat component having a second cut 40 formed at the end remote from the base unit 2, and is held by the housing unit 3 via the linear guide unit 7 so as to be capable of moving in the second direction between the housed position where the slide unit is housed in the housing unit 3 and a grasp position where a workpiece is grasped. The grasp base unit 5, the workpiece grasp unit 6, and the slide unit-moving mechanism 8 are disposed on a first surface 41 of the slide unit 4 whereas the linear guide unit 7 is disposed on a second surface 42 of the slide unit 4 opposite the first surface 41.

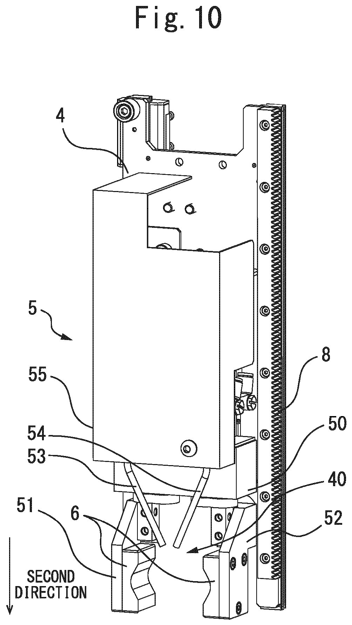

FIG. 10 is a perspective view of the grasp base unit 5.

The grasp base unit 5 includes a grasp driver 50, first and second grasp unit-supporting plates 51 and 52, first and second cutting oil nozzles 53 and 54, and a cover 55, and supports the workpiece grasp unit 6 movably in the width direction of the slide unit 4. The grasp driver 50 moves the workpiece grasp unit 6 supported by the first and second grasp unit-supporting plates 51 and 52 in the width direction of the slide unit 4 in response to compressed air being supplied. When compressed air is supplied so that the workpiece grasp unit 6 is in an open position to release a workpiece W, the grasp driver 50 moves the first and second grasp unit-supporting plates 51 and 52 outward. When compressed air is supplied so that the workpiece grasp unit 6 is in a closed position to grasp a workpiece W, the grasp driver 50 moves the first and second grasp unit-supporting plates 51 and 52 inward.

The first and second grasp unit-supporting plates 51 and 52 are flat components, are movably held by the grasp driver 50, and support the workpiece grasp unit 6. The first and second cutting oil nozzles 53 and 54 discharge cutting oil onto a workpiece W grasped by the workpiece grasp unit 6 when the workpiece W is machined. The cover 55 is disposed to cover the grasp driver 50, the first and second grasp unit-supporting plates 51 and 52, and the first and second cutting oil nozzles 53 and 54.

The workpiece grasp unit 6 is supported by the first and second grasp unit-supporting plates 51 and 52 of the grasp driver 50, and moves in response to the grasp driver 50 moving the first and second grasp unit-supporting plates 51 and 52. The workpiece grasp unit 6 releases a workpiece W at the open position and grasps a workpiece W at the closed position. The grasp base unit 5 and the workpiece grasp unit 6 are also referred to as an air chuck.

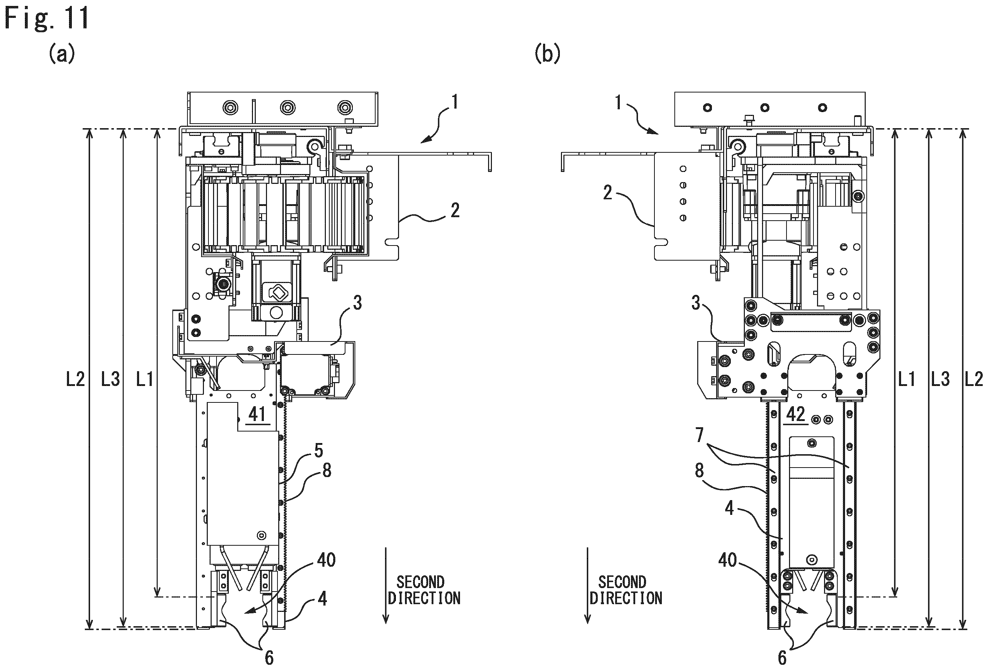

FIGs. 11(a) and 11(b) are a front view and a rear view of the workpiece transfer device 1, respectively.

A first separation distance L1, which is the distance between the base unit 2 and an end of the workpiece grasp unit 6 adjacent to the base unit 2, is less than a second separation distance L2, which is the distance between the base unit 2 and an end of the slide unit 4 remote from the base unit 2. A third separation distance L3, which is the distance between the base unit 2 and an end of the workpiece grasp unit 6 remote from the base unit 2, is less than the second separation distance L2, which is the distance between the base unit 2 and the end of the slide unit 4 remote from the base unit 2. Since the third separation distance L3 is less than the second separation distance L2, the workpiece grasp unit 6 is disposed over the second cut 40 of the slide unit 4 when the workpiece transfer device is viewed from the front.

Each of the first, second, and second separation distances L1, L2, and L3 is the distance in the second direction between a desired reference position on the base unit 2 and the slide unit 4 or the workpiece grasp unit 6. The reference position on the base unit 2 for defining the first, second, and second separation distances L1, L2, and L3 may be, for example, on the lower or upper surface of the base plate 20.

As shown in FIG. 9, the linear guide unit 7 includes a first linear guide 71 and a second linear guide 72, and guides the slide unit 4 in the second direction. The first linear guide 71 includes a first rail 73 and a first holder 74, and is disposed on the second surface 42 along one of a pair of long sides extending in the second direction of the slide unit 4. The second linear guide 72 includes a second rail 75 and a second holder 76, and is disposed on the second surface 42 along the other of the pair of long sides extending in the second direction of the slide unit 4. The first rail 73 and the second rail 75 are disposed along the long sides of the slide unit 4. The first holder 74 and the second holder 76 are recirculating ball linear bearings, also referred to as roller guides, and are disposed on the rear board 34.

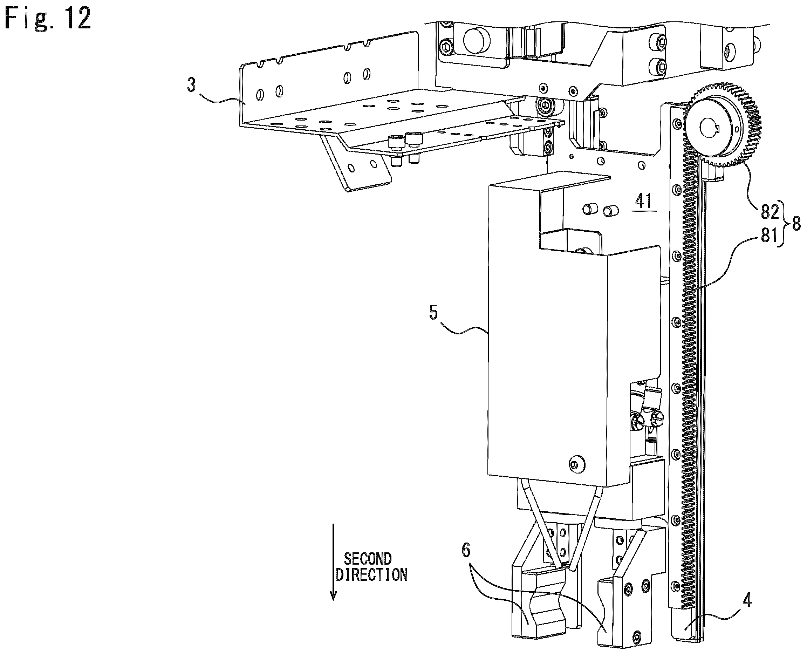

FIG. 12 is a partial perspective view of the workpiece transfer device 1 from which the vertical stepping motor 35 is removed.

The slide unit-moving mechanism 8 includes a rack gear 81 and a pinion 82. The rack gear 81 is disposed on the first surface 41 along one of the pair of long sides extending in the second direction of the slide unit 4. The pinion 82 is screwed to the rack gear 81 and also fitted to the shaft of the vertical stepping motor 35. The pinion 82 rotates in response to the shaft of the vertical stepping motor 35 being rotated, and moves the screwed rack gear 81 to move the slide unit 4 along the first direction.

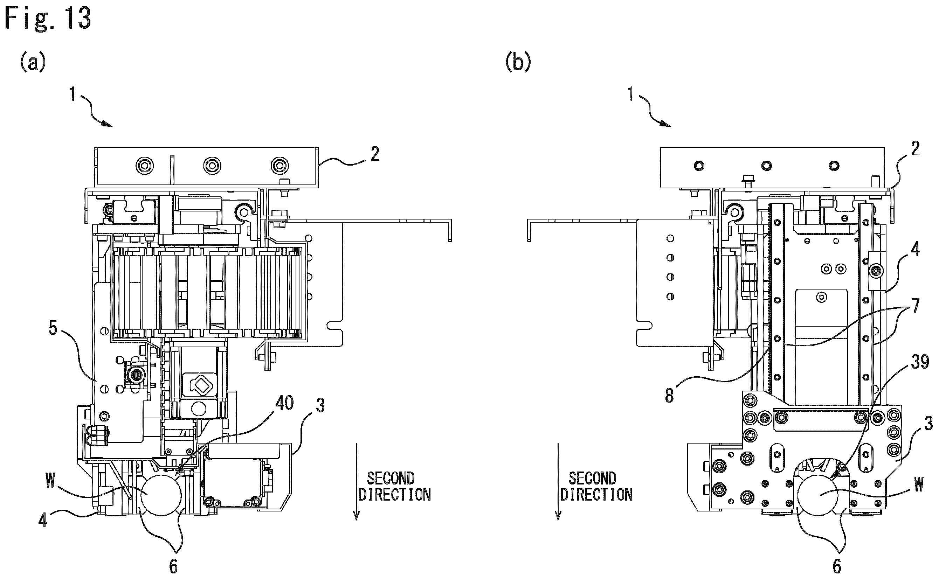

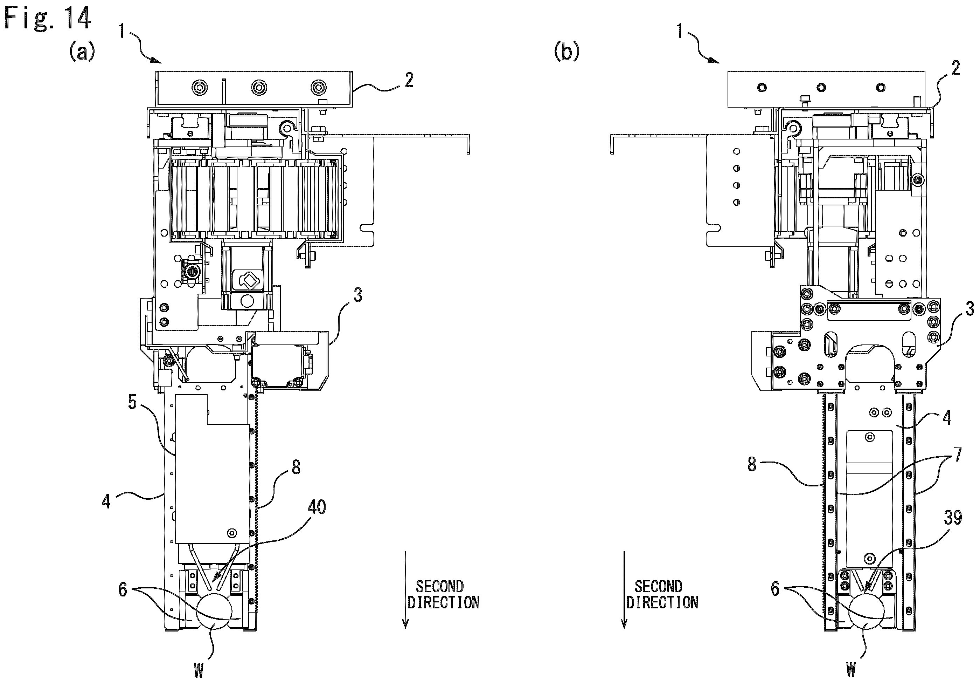

FIGs. 13(a) and 13(b) are a front view and a rear view of the workpiece transfer device 1 grasping a workpiece W at the housed position, respectively. FIGs. 14(a) and 14(b) are a front view and a rear view of the workpiece transfer device 1 grasping a workpiece W at the grasp position, respectively.

At both the housed position and the grasp position, a workpiece W grasped by the workpiece transfer device 1 is disposed inside the second cut 40 formed in the slide unit 4, and is seen over the second cut 40 when viewed from the front. At the housed position, a workpiece W grasped by the workpiece transfer device 1 is disposed inside the first cut 39 formed in the rear board 34 as well as inside the second cut 40, and is seen over the first cut 39 and the second cut 40 when viewed from the front.

In the workpiece transfer device 1, the workpiece grasp unit 6 is disposed over the second cut 40 of the slide unit 4 when the workpiece transfer device 1 is viewed from the front, and is thus disposed without projecting from the end of the slide unit 4 remote from the base unit 2. In the workpiece transfer device 1, the workpiece grasp unit 6, which is disposed without projecting from the end of the slide unit 4 remote from the base unit 2, is shorter in the second direction than when the workpiece grasp unit projects from the slide unit 4, and can be downsized. The workpiece transfer device 1 is short in the second direction, and thus can be disposed near the ceiling inside the machine tool 100.

In the workpiece transfer device 1, since a workpiece W is disposed inside the first cut 39 and the second cut 40 at the housed position, the bottom of the workpiece W is above that of the slide unit 4. Since the bottom of a workpiece W is above that of the slide unit 4, the workpiece W can be moved in the first direction without projecting from the bottom of the slide unit 4.

In the workpiece transfer device 1, since the first rail 73 and the second rail 75 are disposed on either side of the second cut 40, the length of the housing unit 3 in the second direction can be minimized with a workpiece W disposed inside the second cut 40 at the housed position.

In the workpiece transfer device 1, since the first holder 74 and the second holder 76 are disposed on either side of the first cut 39, the lengths of the first rail 73 and the second rail 75 can be maximized with a workpiece W disposed inside the first cut 39 at the housed position.

Since the slide unit 4, which is a flat component, is included, the workpiece transfer device 1 can be more rigid than a workpiece transfer device without a slide unit.

In the workpiece transfer device 1, since the first rail 73 of the first linear guide 71 and the second rail 75 of the second linear guide 72 are disposed to extend in the second direction along the long sides of the slide unit 4, the rigidity of the workpiece transfer device 1 can be further increased. The slide unit 4 can be guided in the second direction with high accuracy by the first rail 73 and the second rail 75 being disposed along the long sides of the slide unit 4.

In the workpiece transfer device 1, since the workpiece grasp unit 6 is disposed so as to be seen near the first rail 73 and the second rail 75 when viewed from the front in the first direction, the width of the workpiece transfer device 1 can be minimized.

In the workpiece transfer device 1, the linear guide unit 7 is disposed on the second surface 42 of the slide unit 4 opposite the first surface 41 where the grasp base unit 5 and the workpiece grasp unit 6 are disposed; the slide unit-moving mechanism 8 is disposed on the first surface 41 of the slide unit 4 where the grasp base unit 5 and the workpiece grasp unit 6 are disposed. The workpiece transfer device 1 can be downsized by optimizing the arrangement of the linear guide unit 7 and the slide unit-moving mechanism 8.

In the workpiece transfer device 1, the third separation distance L3, which is the distance between the base unit 2 and the end of the workpiece grasp unit 6 remote from the base unit 2, is less than the second separation distance L2, which is the distance between the base unit 2 and the end of the slide unit 4 remote from the base unit 2. However, in the workpiece transfer device of the embodiment, the third separation distance L3 may be equal to or greater than the second separation distance L2.

In the workpiece transfer device 1, the linear guide unit 7 includes the first linear guide 71 and the second linear guide 72; however, in the workpiece transfer device of the embodiment, the linear guide unit may include a single rail and holder.

In the workpiece transfer device 1, the first cut 39 is formed in the rear board 34; however, in the workpiece transfer device of the embodiment, no cut may be formed in the rear board. When no cut is formed in the rear board, the first holder 74 and the second holder 76 are disposed between the workpiece grasp unit 6 and the base unit 2.

The machine tool 100 includes two spindles, the front spindle 102 and the rear spindle 103; however, the machine tool of the embodiment may include a single spindle.

## Claims

1. A workpiece transfer device comprising:
a base unit extending in a first direction;
a housing unit disposed upright from the base unit in a second direction orthogonal to the first direction;
a slide unit disposed at a housed position to be housed in the housing unit;
a slide unit-moving mechanism configured to move the slide unit from the housed position;
a linear guide unit configured to guide the slide unit in the second direction; and
a workpiece grasp unit disposed on a first surface of the slide unit near an end of the slide unit remote from the base unit and configured to grasp a workpiece, wherein
a separation distance between the base unit and an end of the workpiece grasp unit adjacent to the base unit is less than a separation distance between the base unit and the end of the slide unit remote from the base unit.

2. The workpiece transfer device according to claim 1, wherein the slide unit has a cut formed at the end remote from the base unit, and
at least part of a workpiece grasped by the workpiece grasp unit is disposed inside the cut formed in the slide unit.

3. The workpiece transfer device according to claim 2, wherein the linear guide unit includes
a first linear guide disposed along one of a pair of sides extending in the second direction of the slide unit; and
a second linear guide disposed along the other of the pair of sides extending in the second direction of the slide unit.

4. The workpiece transfer device according to claim 3, wherein the first linear guide includes a first rail disposed on a second surface of the slide unit opposite the first surface and extending in the second direction as well as a first holder disposed on the housing unit and holding the first rail, and
the second linear guide includes a second rail disposed on the second surface of the slide unit and extending in the second direction as well as a second holder disposed on the housing unit and holding the second rail.

5. The workpiece transfer device according to claim 4, wherein the first rail and the second rail are disposed on either side of the cut formed in the slide unit.

6. The workpiece transfer device according to claim 4, wherein the housing unit has a cut formed at an end remote from the base unit, and
the first holder and the second holder are disposed on either side of the cut formed in the housing unit.

7. The workpiece transfer device according to claim 5, wherein an outer end of the workpiece grasp unit is disposed so as to be seen near the first rail and the second rail when viewed from a front side in the first direction.

8. The workpiece transfer device according to claim 4, wherein the slide unit-moving mechanism includes a rack gear disposed on the first surface along one of the pair of sides extending in the second direction of the slide unit as well as a pinion screwed to the rack gear.

9. The workpiece transfer device according to any one of claims 1 to 8, wherein a separation distance between the base unit and an end of the workpiece grasp unit remote from the base unit is equal to or less than the separation distance between the base unit and the end of the slide unit remote from the base unit.

10. A machine tool comprising:
a spindle that holds a workpiece rotatably;
a tool post that holds a tool for machining a workpiece held by the spindle; and
a workpiece transfer device that transfers a workpiece held by the spindle,
the workpiece transfer device comprising:
a base unit extending in a first direction;
a housing unit disposed upright from the base unit in a second direction orthogonal to the first direction;
a slide unit disposed at a housed position to be housed in the housing unit;
a slide unit-moving mechanism configured to move the slide unit from the housed position;
a linear guide unit configured to guide the slide unit in the second direction; and
a workpiece grasp unit disposed on a first surface of the slide unit near an end of the slide unit remote from the base unit and configured to grasp a workpiece, wherein
a separation distance between the base unit and an end of the workpiece grasp unit adjacent to the base unit is less than a separation distance between the base unit and the end of the slide unit remote from the base unit.
